# EUROPEAN PATENT APPLICATION

(11) **EP 2 371 608 A1**
(43) Date of publication of application: **05.10.2011**
(21) Application number: 11157686.4
(22) Date of filing: 10.03.2011
(51) Int. Cl.: B60K 37/02, G02B 27/01

(54) **High-mount projection display apparatus for a vehicle**

(30) Priority: 31.03.2010 US 751068
(71) Applicant: Delphi Technologies, Inc., Troy, MI 48007 (US)
(72) Inventor: Harbach, Andrew P., Kokomo, IN 46901 (US); Skiver, Steven G., Kokomo, IN 46902 (US); Edenborough, Nancy G., Noblesville, IN 46060 (US)
(74) Representative: Denton, Michael John

(57) **Abstract**

A projection display apparatus (36) that presents a high-mount image (46) to the driver (24) of a vehicle includes an LCD or OLED display device (38) and a set of projection mirrors (40, 42) embedded in an instrument panel (18) forward of the driver (24). The display (38) includes a first display portion (38a, 50) facing away from the driver (24), on which a first image (46) for high-mount presentation is formed. The projection mirrors (40, 42) project the first image (46) back into the driver compartment (10) for presentation to the driver (24) in a high-mount location (30). Preferably, the display (38) further includes a second display portion (38b, 56) facing toward the driver (24), on which a second image (48) for cluster presentation is formed. In the preferred arrangement, the driver (24) directly views the second image (48) in a cluster location (34) disposed below the high mount location (30).

## Description

### TECHNICAL FIELD

The present invention relates to driver displays for motor vehicles, and more particularly to a display apparatus for displaying information in a high-mount location within the driver's forward field of view.

### BACKGROUND OF THE INVENTION

With the advent of automotive-grade electronic sensor systems and display technologies, there has arisen a desire to visually display a wide variety of information in the driver's forward field of view. For example, a static or reconfigurable color liquid-crystal display (LCD) or organic-light-emitting-diode display (OLED) can be used to present the usual operating parameters in digital and/or analog formats, warning messages, navigation maps, and video or infrared images from visible or infrared light imaging sensors.

Based on ergonomic and safety considerations, vehicle manufacturers increasingly desire to segregate the information, presenting information of different content or format in different portions of the driver's forward field of view. In certain vehicles, for example, operating parameter information is presented in an analog format in a cluster location just forward of the steering wheel, and in a digital format in a "high-mount" location near the base of the windshield, or on the lower portion of the windshield in the case of a traditional automotive head-up display.

### SUMMARY OF THE INVENTION

The present invention is directed to a projection display apparatus for presenting a high-mount image to the driver of a vehicle, including an LCD or OLED display device and a set of projection mirrors. The display device is embedded in an instrument panel forward of the driver, and includes a first display portion facing away from the driver, on which the image for high-mount presentation is formed. The projection mirrors, likewise embedded in the instrument panel, project the forward-facing image back into the passenger compartment for presentation to the driver in the high-mount location. The image can be displayed as a virtual image, or a diffuser can be utilized to display the image as a real image.

In a preferred embodiment, the display device further includes a second display portion facing toward the driver, on which a different image for cluster presentation is formed. In this case, the driver directly views the image formed on the second portion of the display in a cluster location disposed below the high mount location. In the preferred configuration, additional cost savings are realized by forming the first and second display portions on a common substrate. The first and second display portions of the display device are vertically separated. The first display portion is disposed below the second display portion.

### BRIEF DESCRIPTION OF THE DRAWINGS

FIG. 1 is a diagram of a projection display apparatus installed in a vehicle instrument panel according to this invention and viewed by a driver of the vehicle.
FIGS. 2A-2B illustrate a display device of the projection display apparatus of FIG. 1. FIG. 2A illustrates a rearward surface of the display device that faces away from the driver for projection viewing, and FIG. 2B illustrates a forward surface of the display device that faces toward from the driver for direct viewing.
FIG. 3 is an illustration of the motor vehicle instrument panel of FIG. 1, as viewed by the driver.

### DESCRIPTION OF THE PREFERRED EMBODIMENT

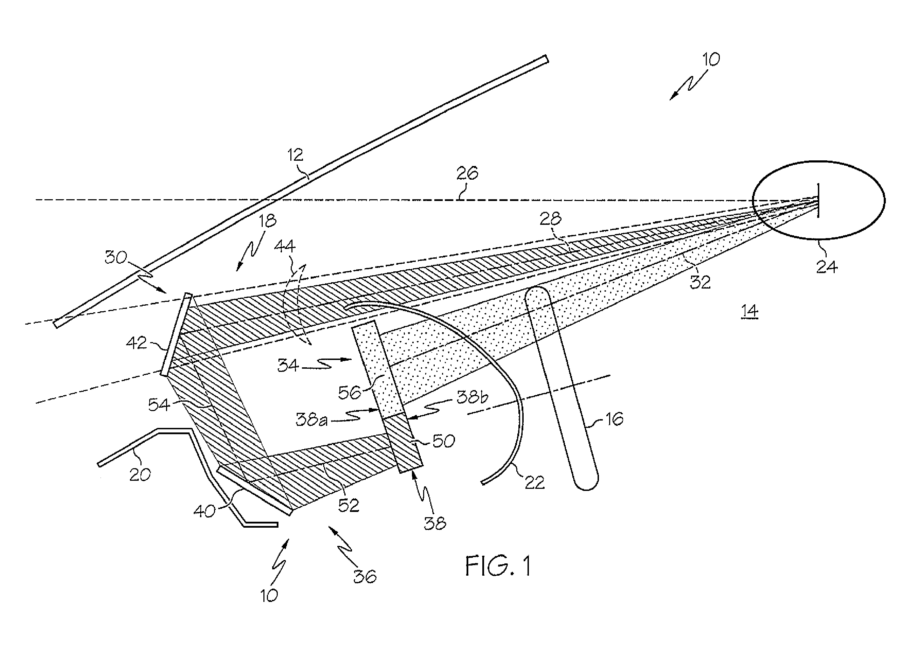

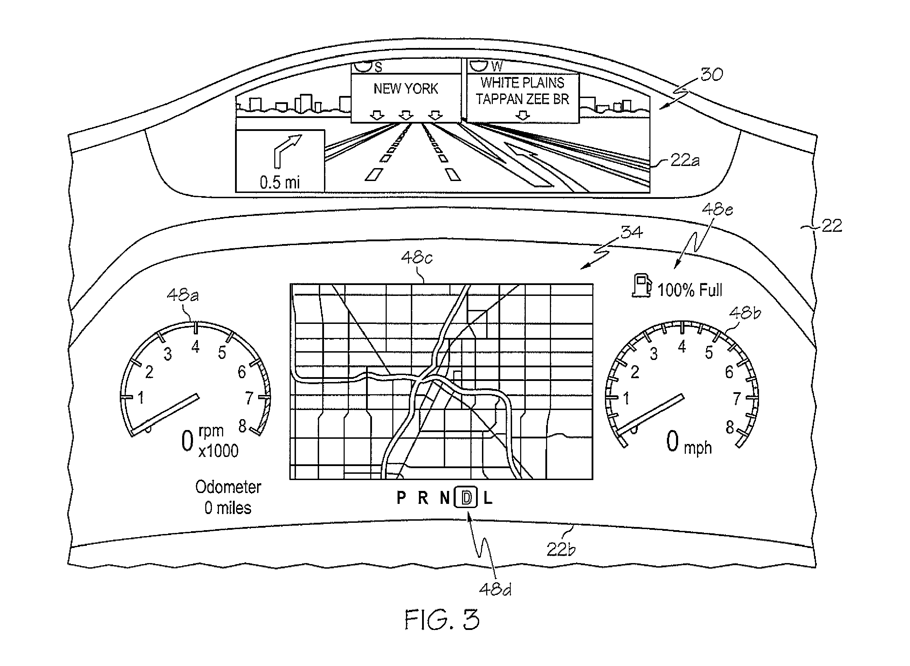

Referring to the drawings, and particularly to FIG. 1, the reference numeral 10 generally designates the cockpit portion of a motor vehicle, including a windshield 12, a passenger compartment 14, a steering wheel 16, and an instrument panel 18. The instrument panel 18 is disposed between steering wheel 16 and an engine compartment bulkhead 20, and includes a trim panel 22 just forward of the steering wheel 16. The vehicle driver 24, when properly seated, has a forward line-of-sight 26 through windshield 12 for viewing a scene in the vehicle's forward direction of travel, a slightly lowered line-of-sight 28 (also referred to as a high-mount line-of-sight) for viewing information in a high-mount location 30, and a still-lower line-of-sight 32 (also referred to as a cluster line-of sight) for viewing information in a cluster location 34 below the high-mount location 30. As shown in FIG. 3, the trim panel 22 includes suitable openings 22a, 22b through which the driver 24 views information displayed in the high-mount and cluster locations 30 and 34, respectively.

The present invention pertains to apparatus embedded within the instrument panel 18 for displaying driver information in the high-mount and cluster locations 30 and 34. The apparatus, generally designated by the reference numeral 36, includes a color LCD or OLED display 38, a set of projection mirrors 40 and 42, and optionally a diffuser element 44.

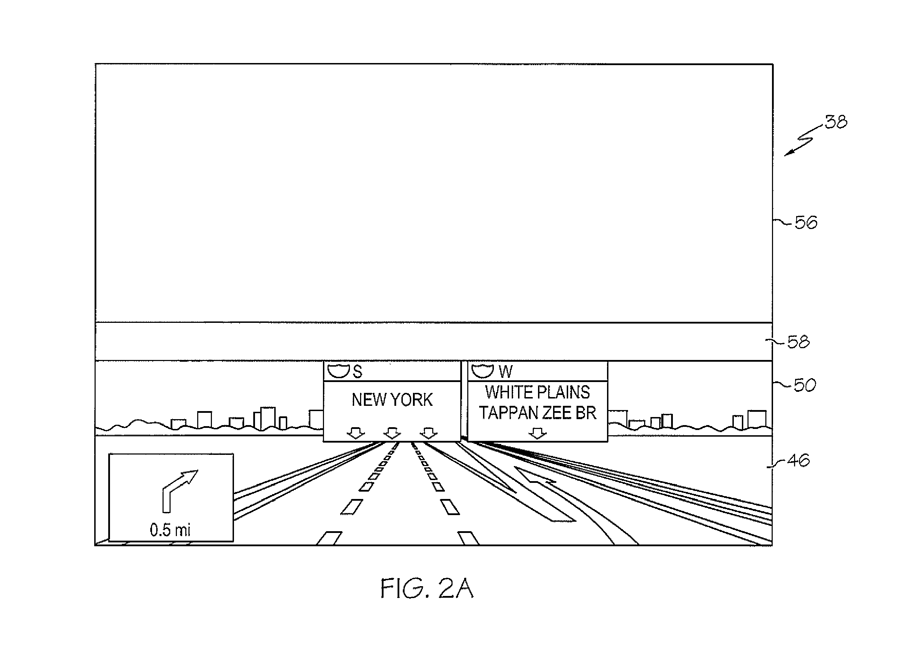

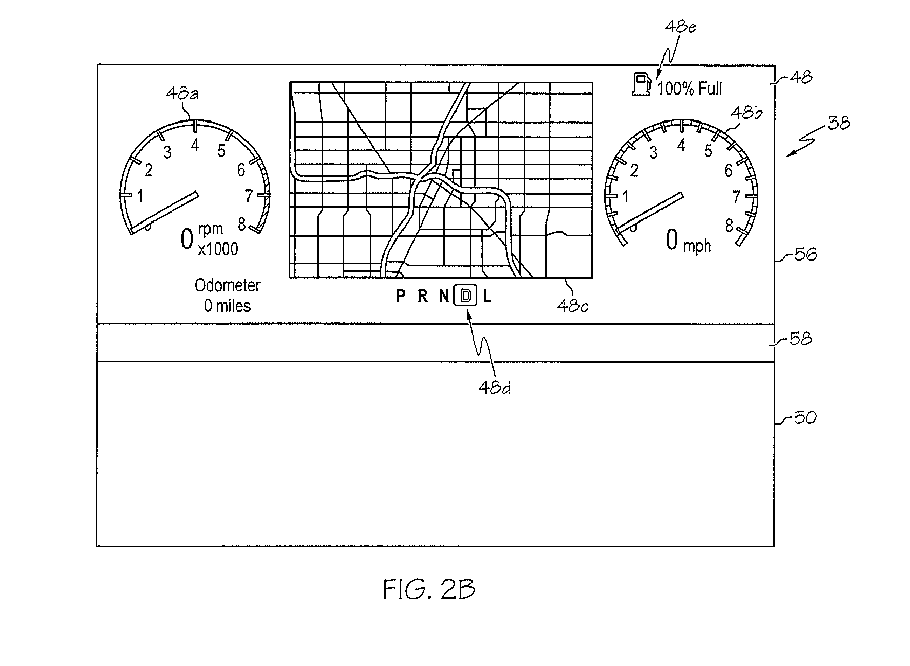

Referring to FIGS. 2A-2B, the display 38 is preferably configured to produce a first image 46 for driver viewing in the high-mount location 30 and a second image 48 for driver viewing in the cluster location 34. In the illustration of FIG. 2A, the first (high-mount) image 46 is a forward-view navigational image featuring signage and turn-by-turn graphic overlays. And in the illustration of FIG. 2B, the second (cluster) image 48 includes simulated analog pointer graphics 48a, 48b, a navigational map 48c, a transmission range indicator 48d, and status graphics such as the fuel level graphic 48e. Of course, the illustrations are merely suggestive of the type of information that could be presented in the high-mount and cluster locations 30 and 34, and the information content and format in a given application are limited only by the capacity and size of the display 38.

Referring to FIGS. 1 and 2A, the first image 46 for high-mount viewing by driver 24 is produced in a bottom/lower portion 50 of display 38, on its rear face 38a - that is, the display surface facing away from driver 24. The first image 46 thus faces away from the driver 24, and the mirrors 40 and 42 respectively reflect the image 46 upward and back into the passenger compartment 14 for viewing by the driver 24 in the high-mount location 30, as designated by the lines 52, 54 and the high-mount line-of-sight 28. The image 46, so viewed, is a virtual image having an apparent location well forward of the instrument panel 18. However, when the optional diffuser 44 is utilized, the image 46 is presented at the face of the diffuser 44 as a real image. And advantageously, the diffuser 44 may be non-planar as illustrated to enable the instrumentation designer to create a desired viewing effect.

Referring to FIGS. 1 and 2B, the second image 48 for cluster viewing by driver 24 is produced in a top/upper portion 56 of display 38, on its front face 38b - that is, the display surface facing toward driver 24. The second image 48 thus faces toward the driver 24 for direct viewing through the instrument panel opening 22b, as indicated by the cluster line-of-sight 32.

In summary, the high-mount projection display apparatus of the present invention provides a way of esthetically and economically utilizing a LCD or OLED display device 38 to present driver information in the high-mount location 30. And when the display device 38 is configured as illustrated to additionally produce a forward-facing image 48 for direct viewing in the cluster location 34, the cost-effectiveness is further enhanced because the forward-facing and rearward-facing display surfaces 38a, 38b can be formed on a single substrate 58 as designated in FIGS. 2A-2B.

While the present invention has been described with respect to the illustrated embodiment, it is recognized that numerous modifications and variations in addition to those mentioned herein will occur to those skilled in the art. For example, the display portions 50, 56 used to the produce the first and second images 46, 48 may be reversed, or arranged laterally instead of vertically, the first image may be projected to a laterally offset location, and so on. Accordingly, it is intended that the invention not be limited to the disclosed embodiment, but that it have the full scope permitted by the language of the following claims.

## Claims

1. Display apparatus (36) for presenting images in a forward field of view of a driver (24) of a motor vehicle, the apparatus comprising:
a display device (38) embedded in an instrument panel (18) forward of the driver (24), the display device (38) including a first display portion (38a, 50) facing away from the driver (24) on which a first image (46) for high-mount presentation is formed; and
first and second projection mirrors (40, 42) embedded in the instrument panel (18) that project said first image (46) back into in a driver compartment (10) of the vehicle for presentation to the driver (24) in a high-mount location (30) of the instrument panel (18).

2. A display apparatus of claim 1, further comprising:
a diffuser (44) disposed in a line-of-sight (28) between the driver (24) and the second projection mirror (42) to present said first image (46) as a real image.

3. A display apparatus as set in any of the preceding claim, where:
said display device (38) is embedded in registration with a cluster location (34) of said instrument panel (18) below said high-mount location (30), and includes a second display portion (38b, 56) facing toward the driver (24) on which a second image (48) for cluster presentation is formed; and
said instrument panel (18) includes an opening (22b) in registration with the second display portion (38b, 56) of said display device (38) through which opening the driver (24) directly views said second image (48).

4. A display apparatus of claim 3, where:
said first and second display portions (38a, 50; 38b, 56) of said display device (38) are formed on a common substrate (58).

5. A display apparatus as set in any of the claim 3 or 4, where:
said first and second display portions (38a, 50; 38b, 56) of said display device (38) are vertically separated, with said first display portion (38a, 50) being disposed below said second display portion (38b, 56).
